# EUROPEAN PATENT SPECIFICATION

(11) **EP 3 835 808 B1**
(45) Date of publication and mention of the grant of the patent: **26.06.2024**
(21) Application number: 20204620.7
(22) Date of filing: 29.10.2020
(51) Int. Cl.: G01S 5/02, G01S 11/06, G01S 5/14

(54) **DYNAMIC POWER POSITIONING METHOD AND DYNAMIC POWER POSITIONING SYSTEM**
VERFAHREN ZUR DYNAMISCHEN SIGNALSTÄRKEPOSITIONIERUNG UND DYNAMISCHES SIGNALSTÄRKEPOSITIONIERUNGSSYSTEM
PROCÉDÉ DE POSITIONNEMENT DE PUISSANCE DYNAMIQUE ET SYSTÈME DE POSITIONNEMENT DE PUISSANCE DYNAMIQUE

(30) Priority: 12.12.2019 TW 108145554
(43) Date of publication of application: 16.06.2021
(73) Proprietor: Gunitech Corp., Hsinchu County 307 (TW)
(72) Inventor: TSENG, Yu-Chee, Qionlin Township Hsinchu County 307 (TW); CHIANG, Ting-Hui, Qionlin Township Hsinchu County 307 (TW); HUANG, Kai-Cheng, Qionlin Township Hsinchu County 307 (TW); SHIU, Huan-Ruei, Qionlin Township Hsinchu County 307 (TW); KAO, Hsin-Yi, Qionlin Township Hsinchu County 307 (TW); HSU, Chung-Liang, Qionlin Township, Hsinchu County 307 (TW)
(74) Representative: Viering, Jentschura & Partner mbB Patent- und Rechtsanwälte

(56) References cited:
- EP-A1- 2 469 298
- JP-A- 2010 239 331
- US-A1- 2018 213 356
- US-A1- 2019 331 760

## Description

### BACKGROUND OF THE INVENTION

### FIELD OF THE INVENTION

The present invention relates to a dynamic power positioning method and a dynamic power positioning system, and more particularly, to a dynamic power positioning method and a dynamic power positioning system using signals of different powers for positioning.

### DESCRIPTION OF THE PRIOR ART

US 2019/331760 A1 discloses a dynamic power positioning method used in a dynamic power positioning system to find out a device location of a device to be measured in a space, wherein the space further comprises a plurality of known location devices, the method comprises the steps of: controlling the device to be measured to transmit a plurality of positioning signals with a plurality of transmission powers; making the plurality of known location devices to receive the plurality of positioning signals; and recording intensities of the plurality of positioning signals, corresponding beacon types of the plurality of positioning signals and IDs of the plurality of known location devices to a database; finding out the known location device corresponding to a positioning signal having a higher signal intensity among the received plurality of positioning; obtaining a signal intensity-distance function from the database, and finding out the device location of the device to be measured according to the signal intensity-distance function.

A further positioning method is known from US 2018/213356 A1.

Traditionally, trilateration is often used as the positioning method for indoor device, wherein the distance required for trilateration is usually calculated using signal intensity or time of arrival (ToA). Therefore, the accuracy of the signal intensity or the time-of-arrival calculation will affect the inferred distance, and thus the accuracy of the trilateral positioning. When the positioning method is based on fixed-power transmitting signals, the positioning accuracy is limited by a decaying form of a single power signal.

Today's mobile devices such as mobile phones are often equipped with various sensors with different functions. Sensors such as gyroscopes and electronic compasses can assist and improve positioning accuracy. However, considering the cost of the device, the indoor positioning device may not be equipped with these sensors and can only rely on signal intensities to estimate distance and use this data for positioning without the aid of sensors. Nevertheless, in the prior art, the signal intensity of the Bluetooth device often changes greatly, resulting in a high positioning error.

Therefore, it is necessary to propose a new dynamic power positioning method and a dynamic power positioning system to solve the problems encountered in the prior art.

### SUMMARY OF THE INVENTION

It is an object of the present invention to provide a dynamic power positioning method, which can achieve the effect of using signals with different powers for positioning.

It is another object of the present invention to provide a dynamic power positioning system for the dynamic power positioning method.

In order to achieve the above objects, the present invention provides a dynamic power positioning method according to claim 1, which is used in a dynamic power positioning system to find out a device location of a device to be measured in a space, wherein the space further comprises a plurality of known location devices.

Further, the present invention provides a dynamic power positioning system according to claim 5.The dependent claims show further embodiments of the said method and the said system according to claims 1 and 5, respectively.

### BRIEF DESCRIPTION OF THE DRAWINGS

Fig.1 illustrates a system architecture diagram of the dynamic power positioning system executing a setting process of the present invention;
Fig.2 illustrates a flowchart of the data setting process of the present invention;
Fig.3 illustrates a system architecture diagram of the dynamic power positioning system executing a positioning process of the present invention;
Fig.4 illustrates a flowchart of a dynamic power positioning method; and
Figs.5A-5B illustrate schematic diagrams related to probability distributions of the dynamic power positioning method of the present invention.

### DETAILED DESCRIPTION OF THE EMBODIMENTS

In order to make the structure and characteristics as well as the effectiveness of the present invention to be further understood and recognized, the detailed description of the present invention is provided as follows along with embodiments and accompanying figures. Embodiments which do not comprise all features of the independent claims are included for highlighting specific aspects of the invention.

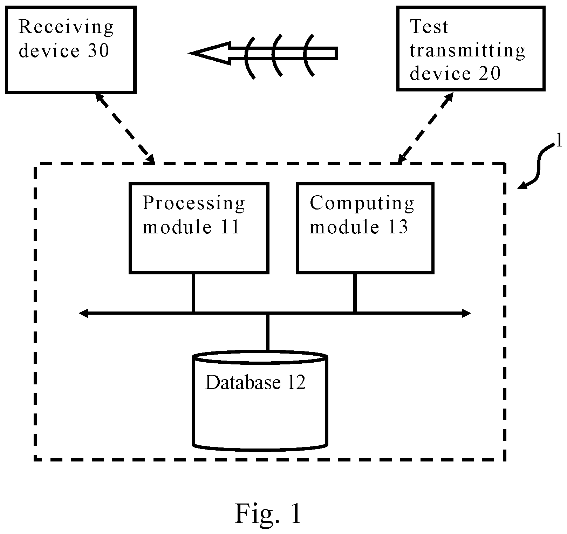

Please refer to Fig.1 for a system architecture diagram of the dynamic power positioning system executing a setting process of the present invention.

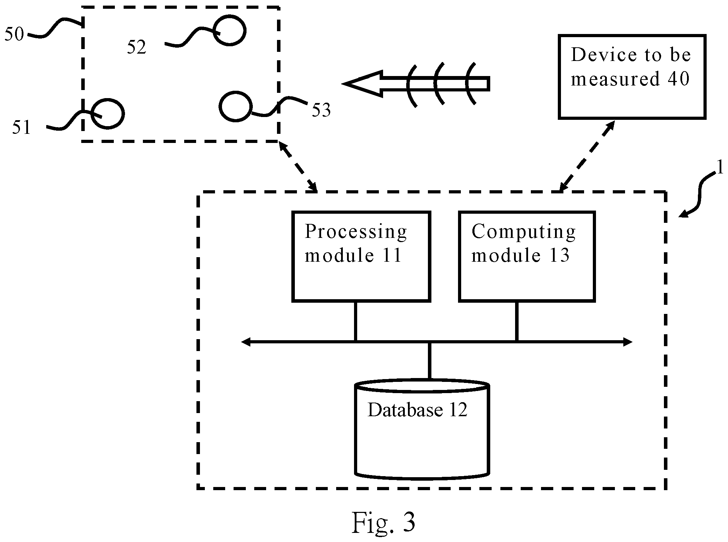

In an embodiment, the dynamic power positioning system 1 includes a processing module 11, a database 12, and a computing module 13 which are electrically connected with each other. The dynamic power positioning system 1 is used for finding out a device location of a device to be measured 40 by using a known location device 50 (as shown in Fig.3) in a space. Before the device to be measured 40 is found, the dynamic power positioning system 1 can also use a test transmitting device 20 and receiving device 30 to establish the required data, but the present invention is not limited thereto. The test transmitting device 20, the receiving device 30, the device to be measured 40, and the known location device 50 can send and receive wireless signals, which can be Bluetooth signals, and the test transmitting device 20, the receiving device 30, the device to be measured 40, and the known location device 50 may also be the same or different home appliances, computer devices, or mobile devices, but the present invention is not limited thereto.

It is noted that each module of the dynamic power positioning system 1 can be constructed by hardware devices, software programs combined with hardware devices, or firmware combined with hardware devices. For example, a computer program product stored in a computer-readable medium can be read to execute various functions of the invention, but the invention is not limited to the above-mentioned manner. In order to implement the present invention, other more detailed conventional modules or components may also be included. The processing module 11, the database 12 or the computing module 13 can be disposed in the same device or in different devices, or can be disposed in any one of the test transmitting device 20, the receiving device 30, the device to be measured 40, or the known location device 50, but the present invention is not limited thereto.

Therefore, in an embodiment of the present invention, the processing module 11 sets a plurality of transmission powers of the test transmitting device 20, so the test transmitting device 20 can transmit a plurality of test signals. Then the processing module 11 makes the receiving device 30 to receive the plurality of test signals at a plurality of corresponding distances from the test transmitting device 20, for example, at a distance of 10 cm, 20 cm, or 1 m to 6 m, wherein different test signals are transmitted with different transmission powers. However, the present invention is not limited to the values stated above. Accordingly, the processing module 11 detects and obtains the plurality of test signal intensities received by the receiving device 30, so as to record the plurality of test signal intensities and the plurality of corresponding distances to the database 12. Finally, the computing module 13 calculates the signal intensity-distance function and the signal intensity-distance standard deviation function based on the values of the database 12, and stores them back to the database 12.

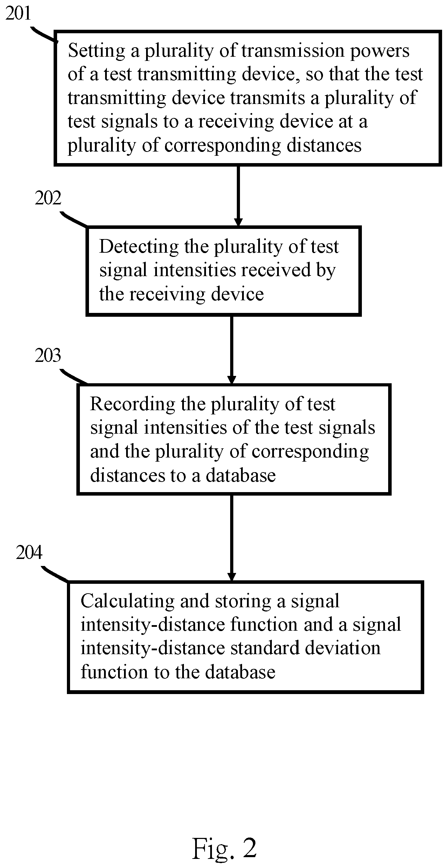

Now please refer to Fig.2 for a flowchart of the data setting process of the present invention. It is noted that although the dynamic power positioning system 1 described above is used as an example to describe the data setting process of the present invention, the data setting process of the present invention is limited to the use of a dynamic power positioning system 1 according to claim 5.

First, the method proceeds to step 201: setting a plurality of transmission powers of a test transmitting device, so that the test transmitting device transmits a plurality of test signals to a receiving device at a plurality of corresponding distances.

First, the processing module 11 sets a plurality of transmission powers of the test transmitting device 20. Therefore, the test transmitting device 20 can transmit a plurality of test signals, and then the receiving device 30 receives the plurality of test signals at different distances of, for example, 10 cm, 20 cm, or 1 meter to 6 meters from the test transmitting device 20.

Then the method proceeds to step 202: detecting the plurality of test signal intensities received by the receiving device.

Then the processing module 11 detects all the test signal intensities received by the receiving device 30.

Then the method proceeds to step 203: recording the plurality of test signal intensities of the test signals and the plurality of corresponding distances to a database.

Then the processing module 11 records all the test signal intensities of the test signals and the corresponding distances to the database 12.

Finally the method proceeds to step 204: calculating and storing a signal intensity-distance function and a signal intensity-distance standard deviation function to the database.

Finally, the computing module 13 can calculate a signal intensity-distance function and a signal intensity-distance standard deviation function for each transmission power according to all the signal intensities of the test signals and the corresponding distances, so that the computing module 13 can obtain the relationship between the signal intensity received by the receiving device 30 and the distance between the receiving device 30 and the test transmitting device 20, and its standard deviation. This relationship can be stored in the database 12. In this way, the data setting process of the present invention is completed.

Next, please refer to Fig.3 for a system architecture diagram of the dynamic power positioning system executing a positioning process of the present invention.

After establishing the signal intensity-distance function and the signal intensity-distance standard deviation function in the database 12, the dynamic power positioning system 1 can use known location devices 50 to find a device location of the device to be measured 40 in the space. It is noted that although in one embodiment of the present invention, the signal intensity-distance function and the signal intensity-distance standard deviation function are obtained by directly performing the data setting process first, the present invention is not limited to performing the data setting process every time to re-create the signal intensity-distance function and the signal intensity-distance standard deviation function in the database 12. The signal intensity-distance function and the signal

intensity-distance standard deviation function can be preset in the device to be measured 40 or the known location device 50.

Hence, the processing module 11 controls the device to be measured 40 to transmit a plurality of positioning signals with a plurality of transmission powers, and makes the plurality of known location devices 50 to receive the plurality of positioning signals and to record the intensities of the plurality of positioning signals, the corresponding reception times of the plurality of positioning signals, and the locations of the plurality of known location device 50 to the database 12. The plurality of known location devices 50 also receive an identification code of the device to be measured 40, thereby identifying the device to be measured 40. This identification code is also stored in the database 12. Therefore, the processing module 11 finds out known devices with higher signal intensities, such as the known location devices 51, 52, 53, according to the received plurality of positioning signals. Finally, the computing module 13 can find out the location of the device to be measured 40 by the signal intensity-distance function and the signal intensity - distance standard deviation function based on the device locations of known location devices 51, 52, 53.

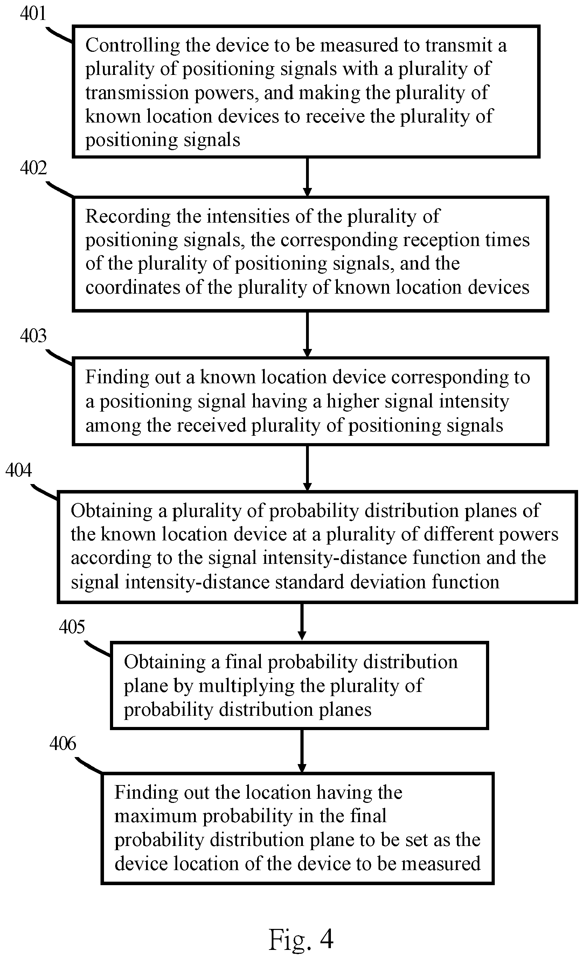

For a detailed description of the method of finding the device location of the device to be measured 40, please refer to Fig.4 for a flowchart of a dynamic power positioning method.

First the method proceeds to step 401: controlling the device to be measured to transmit a plurality of positioning signals with a plurality of transmission powers, and making the plurality of known location devices to receive the plurality of positioning signals.

First, when the device to be measured 40 enters a space, the processing module 11 must first control the device to be measured 40 to transmit a plurality of positioning signals with different transmission powers, so that the plurality of known location devices 50 can receive the plurality of positioning signal of the device to be measured 40. The plurality of known location devices 50 also receives an identification code of the device to be measured 40.

Then the method proceeds to step 402: recording the intensities of the plurality of positioning signals, the corresponding reception times of the plurality of positioning signals, and the coordinates of the plurality of known location devices.

Since the device to be measured 40 transmits the plurality of positioning signals with different transmission powers, after the plurality of known location devices 50 receives the positioning signals, the known location device 50 will send all the intensities of the plurality of positioning signals, the corresponding reception times of the plurality of positioning signals, and the coordinates of the plurality of known location devices to the database 12.

Then the method proceeds to step 403: finding out a known location device corresponding to a positioning signal having a higher signal intensity among the received plurality of positioning signals.

The processing module 11 will find out the known location devices 51, 52, 53 corresponding to the positioning signals having higher signal intensities among the plurality of positioning signals in the database 12.

Then the method proceeds to step 404: obtaining a plurality of probability distribution planes of the known location device at a plurality of different powers according to the signal intensity-distance function and the signal intensity-distance standard deviation function.

The computing module 13 can then query the signal intensity-distance function and the signal intensity-distance standard deviation function according to the intensities of the plurality of positioning signals, the corresponding reception times of the plurality of positioning signals, and the coordinates of the plurality of known location devices having higher signal intensities, by using the fixed coordinates of known location device 51, 52, 53 as the centers of the circles, the distances under the signal intensities are obtained according to the signal intensity-distance function respectively, that is, the distances are set as the base radiuses. Then the signal intensity-distance standard deviation function is used for obtaining the distance standard deviations under the signal intensities, which is, setting the standard deviations as the basis for radius adjustments. Based on the base radiuses and the standard deviations, the probability distribution planes of the known location devices 51, 52, 53 at different powers are calculated.

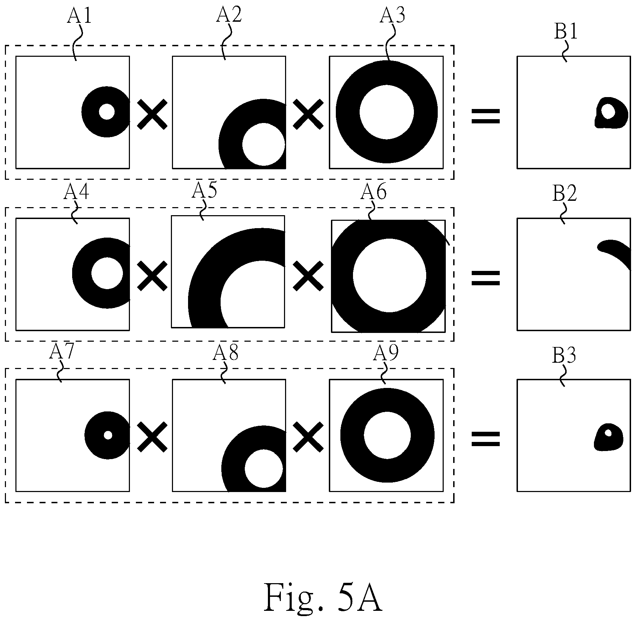

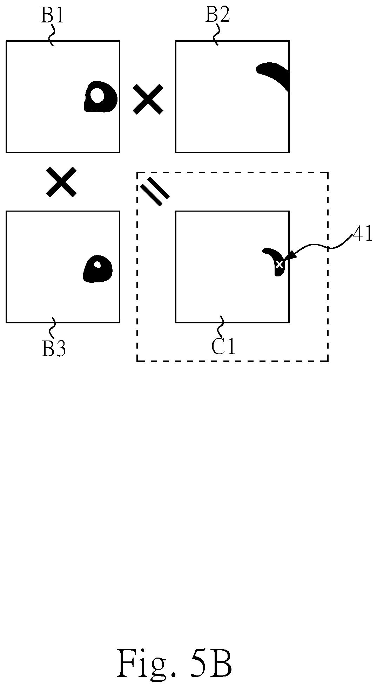

At this time, please refer to Figs.5A-5B are base to Fig.4, to illustrate schematic diagrams related to probability distributions of the dynamic power positioning method of the present invention.

For example, in this embodiment, the nine probability distribution planes A1 to A9 that are possible for the plurality of positioning signals received by the known location devices 51, 52, 53 can be obtained at high, medium, and low powers. Among them, the probability distribution planes A1 to A3 are known location devices 51, 52, 53 at high power, the probability distribution planes A4 to A6 are known location devices 51, 52, 53 at medium power, and the probability distribution planes A7 to A9 are known location devices 51, 52, 53 at low power respectively.

Then the method proceeds to step 405: obtaining a final probability distribution plane by multiplying the plurality of probability distribution planes.

Next, the computing module 13 multiplies the nine probability distribution planes A1 to A9, that is, the probability distribution planes A1 to A3 are first multiplied to obtain the calculated probability distribution plane B1, the probability distribution planes A4 to A6 are multiplied to obtain the calculated probability distribution plane B2, and the probability distribution planes A7 to A9 are multiplied to obtain the calculated probability distribution plane B3. Finally, the calculated probability distribution planes B1 to B3 are multiplied to obtain the final probability distribution plane C1.

Finally the method proceeds to step 406: finding out the location having the maximum probability in the final probability distribution plane to be set as the device location of the device to be measured.

Finally, the computing module 13 finds out the location having the maximum probability from the final probability distribution plane C1, and sets the location having the maximum probability as the device location 41 of the device to be measured 40, and the coordinate of the device to be measured 40 can be obtained.

It is noted that the dynamic power positioning method of the present invention is not limited to the above-mentioned order of steps, as long as the purpose of the present invention can be achieved, the above-mentioned order of steps can also be changed.

By using the dynamic power positioning method and the dynamic power positioning system 1 of the present invention, the position of the device to be measured 40 can be effectively found without installing any additional sensing modules.

Moreover, the embodiments merely described preferred embodiments of the present invention, and the present invention is not to be construed as being limited by these embodiments. To avoid redundant description, not all possible variations and combination are recited in detail.

## Claims

1. A dynamic power positioning method used in a dynamic power positioning system (1) to find out a device location (41) of a device to be measured (40) in a space, wherein the space further comprises a plurality of known location devices (50), the method comprises the steps of:
controlling the device to be measured (40) to transmit a plurality of positioning signals with a plurality of transmission powers;
making the plurality of known location devices (50) to receive the plurality of positioning signals, and recording intensities of the plurality of positioning signals, corresponding reception times of the plurality of positioning signals, and coordinates of the plurality of known location devices (50) to a database;
finding out a plurality of known location devices (51, 52, 53) corresponding to positioning signals having a higher signal intensity among the received plurality of positioning signals;
obtaining a signal intensity-distance function and a signal intensity-distance standard deviation function from the database (12); and
finding out the device location (41) of the device to be measured (40) according to the signal intensity-distance function and the signal intensity-distance standard deviation function; wherein the step of finding out the device location (41) of the device to be measured (40) is performed by querying the signal intensity-distance function and the signal intensity-distance standard deviation function based on the intensities of the plurality of positioning signals, the corresponding reception times of the plurality of positioning signals, and the coordinates of the plurality of known location devices (51, 52, 53) with higher signal intensities;
wherein the dynamic power positioning method further comprises the following step of:
obtaining a plurality of probability distribution planes (A1) of the plurality of known location devices (51, 52, 53) with higher signal intensities at a plurality of different powers according to the signal intensity-distance function and the signal intensity-distance standard deviation function;
obtaining a final probability distribution plane (C1) by multiplying the plurality of probability distribution planes (A1) with each other; and
finding out a location having a maximum probability in the final probability distribution plane (C1) to be set as the device location (41) of the device to be measured (40).

2. The dynamic power positioning method as claimed in Claim 1 further comprising the step of finding out three known location devices (50) with higher signal intensities.

3. The dynamic power positioning method as claimed in Claim 1 further comprising the step of receiving an identification code of the device to be measured (40).

4. The dynamic power positioning method as claimed in Claim 1 further comprising a step of performing a data setting process, wherein the data setting process comprises:
setting a plurality of transmission powers of a test transmitting device (20) so that the test transmitting device (20) transmits a plurality of different test signals to a receiving device (30) at a plurality of corresponding distances, wherein the different test signals correspond to different transmission powers;
detecting intensities of the plurality of test signals received by the receiving device (30);
recording the intensities of the plurality of test signals and the plurality of corresponding distances to the database (12);
calculating the signal intensity-distance function and the signal intensity-distance standard deviation function for each transmission power according to the intensities of the plurality of test signals and the plurality of corresponding distances; and
storing the signal intensity-distance function and the signal intensity-distance standard deviation function to the database (12).

5. A dynamic power positioning system (1) for finding out a device location (41) of a device to be measured (40) in a space, wherein the space further comprises a plurality of known location devices (50), the dynamic power positioning system (1) comprises:
a processing module (11) configured for controlling the device to be measured (40) to transmit a plurality of positioning signals with a plurality of transmission powers, and making the plurality of known location devices (50) to receive the plurality of positioning signals;
a database (12) electrically connected with the processing module (11) and used for storing a signal intensity-distance function and a signal intensity-distance standard deviation function, and recording intensities of the plurality of positioning signals, corresponding reception times of the plurality of positioning signals, and coordinates of the plurality of known location devices (50) after the plurality of known location devices (50) has received the plurality of positioning signals, so that the processing module (11) finds out a plurality of known location devices (51, 52, 53) corresponding to positioning signals having a higher signal intensity among the received plurality of positioning signals; and
a computing module (13) electrically connected with the database (12) and configured for finding out the device location (41) of the device to be measured (40) by querying the signal intensity-distance function and the signal intensity-distance standard deviation function based on the intensities of the plurality of positioning signals, the corresponding reception times of the plurality of positioning signals, and the coordinates of the plurality of known location devices (51, 52, 53) with higher signal intensities;
wherein the processing module (11) obtains plurality of probability distribution planes (A1) of the plurality of known location device (51, 52, 53) with higher signal intensitites at a plurality of different powers according to the signal intensity-distance function and the signal intensity-distance standard deviation function, obtains a final probability distribution plane (C1) by multiplying the plurality of probability distribution planes (A1) with each other, and finds out a location having a maximum probability in the final probability distribution plane (C1) to be set as the device location (41) of the device to be measured (40).

6. The dynamic power positioning system (1) as claimed in Claim 5, wherein the processing module (11) is used for finding out three known location devices (50) with higher signal intensities.

7. The dynamic power positioning system (1) as claimed in Claim 5, wherein the dynamic power positioning system (1) is provided for receiving an identification code of the device to be measured (40).

8. The dynamic power positioning system (1) as claimed in Claim 5, wherein the processing module (11) sets a plurality of transmission powers of a test transmitting device (20) so that the test transmitting device (20) transmits a plurality of different test signals to a receiving device (30) at a plurality of corresponding distances, wherein the different test signals correspond to different transmission powers, when the processing module (11) detects the intensities of the plurality of test signals received by the receiving device (30), the processing module (11) records the intensities of the plurality of test signals and the plurality of corresponding distances to the database (12) so that the computing module (13) calculates the signal intensity-distance function and the signal intensity-distance standard deviation function for each transmission power according to the intensities of the plurality of test signals and the plurality of corresponding distances and stores the signal intensity-distance function and the signal intensity-distance standard deviation function to the database.

## Patentansprüche

1. Dynamisch-Energie-Position-Verfahren, welches bei einem Dynamisch-Energie-Position-System (1) verwendet wird, um einen Geräteort (41) eines zu messenden Geräts (40) in einem Raum heraus zu finden, wobei der Raum weiter mehrere Bekannter-Ort-Geräte (50) aufweist, wobei das Verfahren die Schritte aufweist:
Steuern des zu messenden Geräts (40) mehrere Position-Signale mit mehreren Übertragungsenergien zu übertragen;
Veranlassen der mehreren Bekannter-Ort-Geräte (50) die mehreren Position-Signale zu empfangen, und Aufnehmen von Intensitäten der mehreren Position-Signale, korrespondierenden Empfangszeiten der mehreren Position-Signale, und Koordinaten der mehreren Bekannter-Ort-Geräte (50) in eine Datenbank;
Herausfinden mehrerer Bekannter-Ort-Geräte (51,52,53), welche zu Position-Signalen korrespondieren, welche eine höhere Signalintensität unter den empfangenen mehreren Position-Signalen haben;
Erhalten einer Signal-Intensität-Abstand-Funktion und einer Signal-Intensität-Abstand-Standardabweichung-Funktion von der Datenbank (12); und
Herausfinden des Geräteorts (41) des zu messenden Geräts (40) gemäß der Signal-Intensität-Abstand-Funktion und der Signal-Intensität-Abstand-Standardabweichung-Funktion; wobei der Schritt Herausfinden des Geräteorts (41) des zu messenden Geräts (40) mittels Abfragens der Signal-Intensität-Abstand-Funktion und der Signal-Intensität-Abstand-Standardabweichung-Funktion durchgeführt wird basierend auf den Intensitäten der mehreren Position-Signale, der korrespondierenden Empfangszeiten der mehreren Position-Signale und der Koordinaten der mehreren Bekannter-Ort-Geräte (51, 52, 53) mit höheren Signalintensitäten;
wobei das Dynamisch-Energie-Position-Verfahren weiter den folgenden Schritt aufweist:
Erhalten mehrerer Wahrscheinlichkeit-Verteilung-Ebenen (A1) der mehreren Bekannter-Ort-Geräte (51, 52, 53) mit höheren Signalintensitäten bei mehreren unterschiedlichen Energien gemäß der Signal-Intensität-Abstand-Funktion und der Signal-Intensität-Abstand-Standardabweichung-Funktion;
Erhalten einer finalen Wahrscheinlichkeit-Verteilung-Ebene (C1) mittels Multiplizierens der mehreren Wahrscheinlichkeit-Verteilung-Ebenen (A1) miteinander; und
Herausfinden eines Orts, welcher eine maximale Wahrscheinlichkeit auf der finalen Wahrscheinlichkeit-Verteilung-Ebene (C1) hat, um als Geräteort (41) des zu messenden Geräts (40) gesetzt zu werden.

2. Dynamisch-Energie-Position-Verfahren nach Anspruch 1, welches weiter den Schritt Herausfinden von drei Bekannter-Ort-Geräten (50) mit höheren Signalintensitäten aufweist.

3. Dynamisch-Energie-Position-Verfahren nach Anspruch 1, welches weiter den Schritt Empfangen eines Identifikationscodes des zu messenden Geräts (40) aufweist.

4. Dynamisch-Energie-Position-Verfahren nach Anspruch 1, welches weiter einen Schritt Durchführen eines Daten-Setzen-Vorgangs aufweist, wobei der Daten-Setzen-Vorgang aufweist:
Setzen mehrerer Übertragungsenergien eines Test-Übertragen-Geräts (20), sodass das Test-Übertragen-Gerät (20) mehrere unterschiedliche Testsignale an ein empfangendes Gerät (30) bei mehreren korrespondierenden Abständen überträgt, wobei die unterschiedlichen Testsignale zu unterschiedlichen Übertragungsenergien korrespondieren;
Detektieren von Intensitäten der mehreren Testsignale, welche mittels des empfangenden Geräts (30) empfangen worden sind;
Aufzeichnen der Intensitäten der mehreren Testsignalen und der mehreren korrespondierenden Abstände in die Datenbank (12);
Berechnen der Signal-Intensität-Abstand-Funktion und der Signal-Intensität-Abstand-Standardabweichung-Funktion für jede Übertragungsenergie gemäß den Intensitäten der mehreren Testsignale und der mehreren korrespondierenden Abstände; und
Speichern der Signal-Intensität-Abstand-Funktion und der Signal-Intensität-Abstand-Standardabweichung-Funktion in die Datenbank (12).

5. Dynamisch-Energie-Position-System (1) zum Herausfinden eines Geräteorts (41) eines zu messenden Geräts (40) in einem Raum, wobei der Raum weiter mehrere Bekannter-Ort-Geräte (50) aufweist, wobei das Dynamisch-Energie-Position-System (1) aufweist:
ein Verarbeitungsmodul (11), welches geeignet ist für ein Steuern des zu messenden Geräts (40) mehrere Position-Signale mit mehreren Übertragungsenergien zu übertragen, und für ein Veranlassen der mehreren Bekannter-Ort-Geräte (50) die mehreren Position-Signale zu empfangen;
eine Datenbank (12), welche elektrisch mit dem Verarbeitungsmodul (11) verbunden ist und verwendet wird für ein Speichern einer Signal-Intensität-Abstand-Funktion und einer Signal-Intensität-Abstand-Standardabweichung-Funktion, und für ein Aufzeichnen von Intensitäten der mehreren Position-Signale, korrespondierenden Empfangszeiten der mehreren Position-Signale und Koordinaten der mehreren Bekannter-Ort-Geräte (50) nachdem die mehreren Bekannter-Ort-Geräte (50) die mehreren Position-Signale empfangen haben, sodass das Verarbeitungsmodul (11) mehrere Bekannter-Ort-Geräte (51, 52, 53) herausfindet, welche mit Position-Signalen korrespondieren, welche eine höhere Signalintensität unter den empfangenen mehreren Position-Signalen haben; und
ein Rechenmodul (13), welches elektrisch mit der Datenbank (12) verbunden ist und geeignet ist für ein Herausfinden des Geräteorts (41) des zu messenden Geräts (40) mittels Abfragens der Signal-Intensität-Abstand-Funktion und der Signal-Intensität-Abstand-Standardabweichung-Funktion basierend auf den Intensitäten der mehreren Position-Signalen, den korrespondierenden Empfangszeiten der mehreren Position-Signalen und den Koordinaten der mehreren Bekannter-Ort-Geräten (51, 52, 53) mit höheren Signalintensitäten;
wobei das Verarbeitungsmodul (11) mehrere Wahrscheinlichkeit-Verteilung-Ebenen (A1) der mehreren Bekannter-Ort-Geräte (51, 52, 53) mit höheren Signalintensitäten bei mehreren unterschiedlichen Energien gemäß der Signal-Intensität-Abstand-Funktion und der Signal-Intensität-Abstand-Standardabweichung-Funktion erhält, eine finale Wahrscheinlichkeit-Verteilung-Ebene (C1) erhält mittels Multiplizierens der mehreren Wahrscheinlichkeit-Verteilung-Ebenen (A1) miteinander, und Herausfinden eines Orts, welcher eine maximale Wahrscheinlichkeit in der finalen Wahrscheinlichkeit-Verteilung-Ebene (C1) hat, welcher als der Geräteort (41) des zu messenden Geräts (40) gesetzt wird.

6. Dynamisch-Energie-Position-System (1) nach Anspruch 5, wobei das Verarbeitungsmodul (11) verwendet wird für ein Herausfinden von drei Bekannter-Ort-Geräten (50) mit höherer Signalintensität.

7. Dynamisch-Energie-Position-System (1) nach Anspruch 5, wobei das Dynamisch-Energie-Position-System (1) für ein Empfangen eines Identifikationscodes des zu messenden Geräts (40) bereitgestellt ist.

8. Dynamisch-Energie-Position-System (1) nach Anspruch 5, wobei das Verarbeitungsmodul (11) mehrere Übertragungsenergien eines Test-Übertragen-Geräts (20) setzt, sodass das Test-Übertragen-Gerät (20) mehrere unterschiedliche Testsignale an ein empfangendes Gerät (30) bei mehreren korrespondierenden Abständen überträgt, wobei die unterschiedlichen Testsignale zu unterschiedlichen Übertragungsenergien korrespondieren, wenn das Verarbeitungsmodul die Intensitäten der mehreren Testsignale detektiert, welche mittels des empfangenden Geräts (30) empfangen worden sind, das Verarbeitungsmodul (11) zeichnet die Intensitäten der mehreren Testsignale und der mehreren korrespondierenden Abstände in die Datenbank (12) auf, sodass das Rechenmodul (13) die Signal-Intensität-Abstand-Funktion und die Signal-Intensität-Abstand-Standardabweichung-Funktion für jede Übertragungsenergie gemäß den Intensitäten der mehreren Testsignalen und der mehreren korrespondierenden Abstände berechnet und speichert die Signal-Intensität-Abstand-Funktion und die Signal-Intensität-Abstand-Standardabweichung-Funktion in die Datenbank.

## Revendications

1. Procédé de positionnement de puissance dynamique utilisé dans un système de positionnement de puissance dynamique (1) pour trouver une localisation de dispositif (41) d'un dispositif à mesurer (40) dans un espace, dans lequel l'espace comprend en outre une pluralité de dispositifs de localisation connue (50), le procédé comprenant les étapes suivantes consistant à :
commander le dispositif à mesurer (40) pour transmettre une pluralité de signaux de positionnement avec une pluralité de puissances de transmission ;
faire en sorte que la pluralité de dispositifs de localisation connue (50) reçoivent la pluralité de signaux de positionnement, et enregistrer dans une base de données des intensités de la pluralité de signaux de positionnement, des temps de réception correspondants de la pluralité de signaux de positionnement, et des coordonnées de la pluralité de dispositifs de localisation connue (50) ;
trouver une pluralité de dispositifs de localisation connue (51, 52, 53) correspondant à des signaux de positionnement ayant une intensité de signal plus élevée parmi la pluralité de signaux de positionnement reçus ;
obtenir une fonction d'intensité de signal-distance et une fonction d'intensité de signal-distance écart-type à partir de la base de données (12) ; et
trouver la localisation de dispositif (41) du dispositif (40) à mesurer selon la fonction d'intensité de signal-distance et la fonction d'intensité de signal-distance écart-type ; l'étape consistant à trouver la localisation de dispositif (41) du dispositif (40) à mesurer étant effectuée en interrogeant la fonction d'intensité de signal-distance et la fonction d'intensité de signal-distance écart-type sur la base des intensités de la pluralité de signaux de positionnement, des temps de réception correspondants de la pluralité de signaux de positionnement et des coordonnées de la pluralité de dispositifs de localisation connue (51, 52, 53) ayant des intensités de signal plus élevées ;
dans lequel le procédé de positionnement de puissance dynamique comprend en outre l'étape suivante consistant à :
obtenir une pluralité de plans de distribution de probabilité (A1) de la pluralité de dispositifs de localisation connue (51, 52, 53) ayant des intensités de signal plus élevées à une pluralité de puissances différentes selon la fonction d'intensité de signal-distance et la fonction d'intensité de signal-distance écart-type ;
obtenir un plan de distribution de probabilité final (C1) en multipliant la pluralité de plans de distribution de probabilité (A1) les uns avec les autres ; et
trouver une localisation ayant une probabilité maximale dans le plan de distribution de probabilité final (C1) à définir comme la localisation de dispositif (41) du dispositif (40) à mesurer.

2. Procédé de positionnement de puissance dynamique selon la revendication 1, comprenant en outre l'étape consistant à trouver trois dispositifs de localisation connue (50) ayant des intensités de signal plus élevées.

3. Procédé de positionnement de puissance dynamique selon la revendication 1, comprenant en outre l'étape consistant à recevoir un code d'identification du dispositif à mesurer (40).

4. Procédé de positionnement de puissance dynamique selon la revendication 1, comprenant en outre une étape consistant à exécuter un processus de définition de données, le processus de définition de données comprenant :
la définition d'une pluralité de puissances de transmission d'un dispositif de transmission de test (20) de sorte que le dispositif de transmission de test (20) transmet une pluralité de signaux de test différents vers un dispositif de réception (30) à une pluralité de distances correspondantes, les signaux de test différents correspondant à des puissances de transmission différentes ;
la détection d'intensités de la pluralité de signaux de test reçus par le dispositif de réception (30) ;
l'enregistrement des intensités de la pluralité de signaux de test et de la pluralité de distances correspondantes dans la base de données (12) ;
le calcul de la fonction d'intensité de signal-distance et de la fonction d'intensité de signal-distance écart-type pour chaque puissance de transmission en fonction des intensités de la pluralité de signaux de test et de la pluralité de distances correspondantes ; et
le stockage de la fonction d'intensité de signal-distance et de la fonction d'intensité de signal-distance écart-type dans la base de données (12).

5. Système de positionnement de puissance dynamique (1) pour trouver une localisation de dispositif (41) d'un dispositif (40) à mesurer dans un espace, dans lequel l'espace comprend en outre une pluralité de dispositifs de localisation connue (50), le système de positionnement de puissance dynamique (1) comprenant :
un module de traitement (11) configuré pour commander le dispositif à mesurer (40) pour transmettre une pluralité de signaux de positionnement avec une pluralité de puissances de transmission et pour faire en sorte que la pluralité de dispositifs de localisation connue (50) reçoivent la pluralité de signaux de positionnement ;
une base de données (12) connectée électriquement au module de traitement (11) et utilisée pour stocker une fonction d'intensité de signal-distance et une fonction d'intensité de signal-distance écart-type, et pour enregistrer des intensités de la pluralité de signaux de positionnement, des temps de réception correspondants de la pluralité de signaux de positionnement et des coordonnées de la pluralité de dispositifs de localisation connue (50) après que la pluralité de dispositifs de localisation connue (50) a reçu la pluralité de signaux de positionnement, de sorte que le module de traitement (11) trouve une pluralité de dispositifs de localisation connue (51, 52, 53) correspondant à des signaux de positionnement ayant une intensité de signal plus élevée parmi la pluralité de signaux de positionnement reçus ; et
un module de calcul (13) connecté électriquement à la base de données (12) et configuré pour trouver la localisation de dispositif (41) du dispositif (40) à mesurer en interrogeant la fonction d'intensité de signal-distance et la fonction d'intensité de signal-distance écart-type sur la base des intensités de la pluralité de signaux de positionnement, des temps de réception correspondants de la pluralité de signaux de positionnement et des coordonnées de la pluralité de dispositifs de localisation connue (51, 52, 53) ayant des intensités de signal plus élevées ;
dans lequel le module de traitement (11) obtient une pluralité de plans de distribution de probabilité (A1) de la pluralité de dispositifs de localisation connue (51, 52, 53) ayant des intensités de signal plus élevées à une pluralité de puissances différentes selon la fonction d'intensité de signal-distance et la fonction d'intensité de signal-distance écart-type, obtient un plan de distribution de probabilité final (C1) en multipliant la pluralité de plans de distribution de probabilité (A1) les uns par les autres, et trouve une localisation ayant une probabilité maximale dans le plan de distribution de probabilité final (C1) à définir comme la localisation de dispositif (41) du dispositif (40) à mesurer.

6. Système de positionnement de puissance dynamique (1) selon la revendication 5, dans lequel le module de traitement (11) est utilisé pour trouver trois dispositifs de localisation connue (50) ayant des intensités de signal plus élevées.

7. Système de positionnement de puissance dynamique (1) selon la revendication 5, dans lequel le système de positionnement de puissance dynamique (1) est prévu pour recevoir un code d'identification du dispositif (40) à mesurer.

8. Système de positionnement de puissance dynamique (1) selon la revendication 5, dans lequel le module de traitement (11) définit une pluralité de puissances de transmission d'un dispositif de transmission de test (20), de sorte que le dispositif de transmission de test (20) transmet une pluralité de signaux de test différents vers un dispositif de réception (30) à une pluralité de distances correspondantes, dans lequel les différents signaux de test correspondent à des puissances de transmission différentes lorsque le module de traitement (11) détecte les intensités de la pluralité de signaux de test reçus par le dispositif de réception (30), le module de traitement (11) enregistre les intensités de la pluralité de signaux de test et la pluralité de distances correspondantes dans la base de données (12), de sorte que le module de calcul (13) calcule la fonction d'intensité de signal-distance et la fonction d'intensité de signal-distance écart-type pour chaque puissance de transmission en fonction des intensités de la pluralité de signaux de test et de la pluralité de distances correspondantes,
et stocke la fonction d'intensité de signal-distance et la fonction d'intensité de signal-distance écart-type dans la base de données.
